(19) **Europäisches Patentamt**
**European Patent Office**
**Office européen des brevets**

(11) **EP 3 242 249 B1**

(12) **FASCICULE DE BREVET EUROPEEN**

(45) Date de publication et mention
de la délivrance du brevet:
**19.07.2023 Bulletin 2023/29**

(51) Classification Internationale des Brevets (IPC):
**G06V 10/141** *(2022.01)* **G06V 10/143** *(2022.01)*
**G06V 40/13** *(2022.01)* **G06V 40/12** *(2022.01)*

(21) Numéro de dépôt: **17168273.5**

(52) Classification Coopérative des Brevets (CPC):
**G06V 40/1394; G06V 10/141; G06V 10/143;
G06V 40/13**

(22) Date de dépôt: **26.04.2017**

(54) **DISPOSITIF ET PROCÉDÉ DE CAPTURE OPTIQUE À DIFFÉRENTES LONGUEURS D'ONDE ÉMISES EN SÉQUENCE**

OPTISCHER FINGERABDRUCK SENSOR UND METHOD BASIEREND AUF SEQUENZIELLER AUFNAHME VERSCHIEDENER WELLENLÄNGEN

OPTICAL FINGERPRINT CAPTURING APPARATUS AND METHOD, CAPTURING AT DIFFERENT WAVELENGTHS IN AS SEQUENTIAL MANNER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.05.2016 FR 1653965**

(43) Date de publication de la demande:
**08.11.2017 Bulletin 2017/45**

(73) Titulaire: **Idemia Identity & Security France
92400 Courbevoie (FR)**

(72) Inventeurs:
• **RIEUL, François
92130 ISSY-LES-MOULINEAUX (FR)**
• **BEAUDET, Jean
92130 ISSY-LES-MOULINEAUX (FR)**

(74) Mandataire: **Idemia
2, place Samuel de Champlain
92400 Courbevoie (FR)**

(56) Documents cités:
EP-A2- 2 070 005     WO-A1-2012/005809
US-A1- 2004 120 553     US-A1- 2006 110 015
US-A1- 2009 148 005

• Lukas Brabec: "Biometric Liveness Detection for the Fingerprint Recognition Technology", Master Thesis, 27 mai 2015 (2015-05-27), XP055334557, Extrait de l'Internet: URL:https://www.vutbr.cz/www_base/zav_prac e_soubor_verejne.php?file_id=114898 [extrait le 2017-01-12]

**EP 3 242 249 B1**

**Description**

La présente invention concerne le domaine de la biométrie et, plus particulièrement, un dispositif et un procédé de capture optique d'empreintes digitales. L'invention est utilisable dans différents types d'application comme l'autorisation d'accès à des lieux protégés tels que les salles d'embarquement des aéroports ou à des entreprises, ou comme le déverrouillage de matériel tels que les téléphones mobiles de type « smartphone », les ordinateurs portables ou encore les coffres forts.

ARRIERE-PLAN DE L'INVENTION

L'identification d'un individu par des moyens électroniques de reconnaissance biométrique s'est beaucoup développée grâce aux progrès de l'informatique et de la micro-électronique pour atteindre un degré élevé de rapidité et de fiabilité.

Dans les techniques couramment utilisées, l'identification résulte d'une reconnaissance des empreintes digitales mais peut résulter aussi d'une reconnaissance faciale, d'une reconnaissance vocale, d'une reconnaissance morphologique, ou bien encore d'une reconnaissance de l'iris.

Il est connu de réaliser l'acquisition biométrique d'empreintes digitales au moyen d'un dispositif de capture optique.

Le principe de fonctionnement de cette technologie est bien connu. L'acquisition consiste à capturer une zone partielle ou totale de la structure dermatoglyphe de l'individu. Cette zone se limite le plus souvent à une ou plusieurs phalanges distales des individus.

Il est courant que le dispositif de capture comprenne un capteur optique associé à un moyen d'éclairage fournissant une exposition lumineuse contrôlée desdites phalanges. L'exposition lumineuse est contrôlée pour accroître le contraste des lignes papillaires et donc augmente la justesse de l'identification.

La quantité de lumière peut varier significativement en fonction de la luminosité ambiante mais peut également varier suivant l'état physiologique du doigt (par exemple, si le doigt est sec ou humide). Pour augmenter la qualité de l'acquisition, il convient d'adapter le niveau d'éclairage à ces conditions.

Par ailleurs, il est connu d'utiliser des rayonnements lumineux de longueurs d'onde différentes pour faciliter la détection des fraudes.

Le document US 2009/148005 A1 (ROWE ROBERT K [US]) concerne la biométrie multispectrale où une source d'éclairage éclaire un doigt avec plusieurs conditions optiques distinctes.

OBJET DE L'INVENTION

Un but de la présente invention est d'améliorer les performances de l'acquisition biométrique en exploitant différentes propriétés de la peau en présence de rayonnements de longueurs d'onde différentes.

BRÈVE DESCRIPTION DE L'INVENTION

En vue de la réalisation de ce but, on propose, selon l'invention, un dispositif de capture optique d'empreintes digitales et une procédé de capture optique d'une empreinte d'un doigt selon les revendications annexées.

BRÈVE DESCRIPTION DES DESSINS

Il sera fait référence à la figure unique annexée représentant un schéma d'ensemble d'un dispositif de capture optique selon l'invention.

DESCRIPTION DETAILLEE DE L'INVENTION

En référence à la figue 1, le dispositif de capture otique d'empreintes digitales selon l'invention comprend un bâti délimitant une zone de capture et contenant un moyen d'illumination 2 de la zone de capture, un moyen de détection optique 3 et un moyen de commande 4 relié au moyen d'illumination 2 et au moyen de détection optique 3. Un tel dispositif de capture est couramment appelé lecteur d'empreinte digitale.

De façon connue en elle-même, la zone de capture est ici définie par une vitre sur laquelle les candidats à l'identification doivent poser une de leur main. Le moyen d'illumination 2 et le moyen de détection optique 3 sont disposés dernière cette vitre.

Le moyen d'illumination 2 comprend ici une série de diodes électroluminescentes disposées pour émettre un rayonnement lumineux dans la zone de capture. Les diodes électroluminescentes ont des longueurs d'onde différentes et peuvent être commandées sélectivement de telle manière que le moyen d'illumination 2 a une puissance et une longueur d'onde qui sont variables de sorte que la puissance et la longueur d'onde des rayonnements sont des paramètres réglables. Plus précisément, le moyen d'illumination 2 comprend des diodes électroluminescentes dont la longueur d'onde est comprise dans une première plage de longueurs d'onde proches du rouge et des diodes électroluminescentes dont la longueur d'onde est comprise dans une deuxième plage de longueurs d'onde proches du bleu ou du vert.

Le moyen de détection optique 3 comprend un capteur optique sensible aux rayonnements de longueurs d'onde différentes. Plus précisément, le capteur est agencé pour être sensible au rayonnement lumineux ayant une longueur d'ondes comprise dans un domaine couvrant le domaine visible et le domaine infrarouge. Le capteur est agencé pour avoir un gain et un temps d'exposition qui soient réglables.

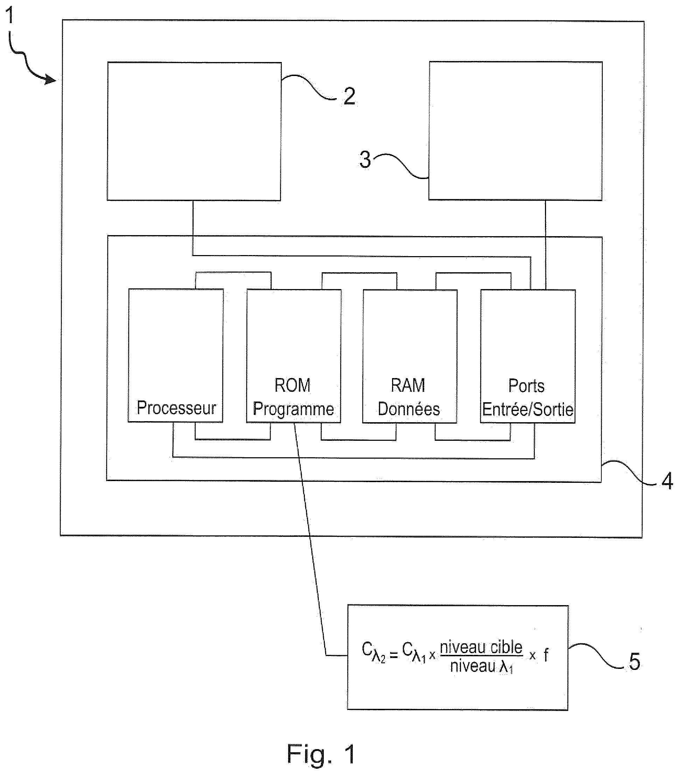

En référence à la figure 1, le moyen de commande 4 comporte un microcontrôleur qui comprend un processeur, une mémoire vive, une mémoire morte, un générateur de signaux et au moins un comparateur.

Il est agencé pour commander le moyen d'illumination 2 de manière à régler les paramètres d'illumination, à savoir :

- la longueur d'onde du rayonnement lumineux émis ;
- la puissance du rayonnement lumineux émis.

Le moyen de commande 4 est également agencé pour commander le moyen de détection 3 de manière à régler les paramètres de détection, à savoir :

- le gain ;
- le temps d'exposition.

Le moyen de commande 4 est agencé pour effectuer le réglage des paramètres d'illumination et de détection pour une capture en déterminant des consignes à partir de la réponse obtenue par le capteur optique lors de la capture précédente.

L'invention s'appuie sur les propriétés d'absorption et de réflexion de la peau. En effet, l'épiderme humain présente des propriétés différentes selon la longueur d'onde du rayonnement lumineux auquel il est exposé. La peau a tendance à absorber les rayonnements proches du rouge et inversement la peau est très réflective pour des rayonnements proches du bleu.

Ainsi, pour une illumination dans le domaine visible, le niveau du canal bleu gagne à être amplifié dans le cas d'un doigt sec, sinon les niveaux de rayonnement réfléchi détecté par le capteur sont extrêmement bas et le ratio rayonnement sur bruit est faible. A l'inverse dans le cas d'un doigt humide, les niveaux de rayonnement réfléchi détecté par le capteur sont proches de la saturation, phénomène qui altère la qualité de l'acquisition.

Le procédé de capture selon l'invention comprend les étapes suivantes:

- effectuer une première capture optique d'une première image d'un doigt sous une exposition lumineuse à la première plage de longueurs d'onde ;
- calculer un niveau de référence qui est la moyenne sur une région prédéfinie de la première image du doigt ;
- calculer une consigne d'émission du rayonnement à la deuxième plage de longueurs d'onde ;
- effectuer une deuxième capture optique d'une deuxième image du doigt sous une exposition lumineuse à la deuxième plage de longueurs d'onde ;
- extraire de la deuxième image des caractéristiques représentatives d'une empreinte digitale.

La consigne d'émission du rayonnement à la deuxième plage de longueurs d'onde est obtenue en utilisant, par exemple, la relation suivante :

$$c_{\lambda_2} = c_{\lambda_1} * \frac{niveau_{cible}}{niveau_{\lambda_1}} * facteur_{\lambda_1 \rightarrow \lambda_2}$$

où

- $c_{\lambda 1}$ est la consigne du premier rayonnement à la première plage de longueurs d'onde ;
- $c_{\lambda 2}$ est la consigne du deuxième rayonnement à la deuxième plage de longueurs d'onde ;
- $niveau_{cible}$ est le niveau théorique espéré de l'émission du premier rayonnement ;
- $niveau_{\lambda 1}$ est le niveau réel mesuré lors de l'émission du premier rayonnement ;
- $facteur_{\lambda 1 \rightarrow \lambda 2}$ prend en compte le ratio d'albédo de la peau entre le rayonnement à la première longueur d'onde et le rayonnement à la deuxième longueur d'onde, ainsi qu'un ratio du système émission et détection.

On notera que l'intervalle de temps entre la première capture et la deuxième capture doit être suffisamment faible pour écarter toute tentative de fraude qui consisterait à placer devant le lecteur successivement deux objets dont l'analyse combinée des captures présenterait les propriétés similaires à celui de l'épiderme humain.

Selon une version avantageuse de l'invention, le procédé intègre une mesure de l'éclairage ambiant. On cherche à augmenter la qualité de l'acquisition en tenant compte de l'éclairage ambiant. A cet effet, une capture supplémentaire est effectuée entre la première capture et la deuxième capture.

Le procédé comprend alors, après la première capture, les étapes de :

- effectuer, après avoir effectué la première capture, une capture optique intermédiaire sous une exposition lumineuse ambiante ($niveau_{exterieur}$) ;
- déduire un niveau d'exposition lumineuse ambiante pour calculer un rapport d'optimisation vis-à-vis de la saturation du deuxième rayonnement ;
- prendre en compte ce rapport d'optimisation comme paramètre d'amplification de manière à effectuer la deuxième capture optique sous une exposition lumineuse optimale.

Le rapport d'optimisation vis-à-vis de la saturation du deuxième rayonnement est nommé m/sat et est calculé comme suit :

$$\frac{m}{sat} = \frac{min_x \left( sat - niveau_{exterieur} \right)}{sat}$$

où

- m est une marge pour maximiser la quantité de rayonnement dans la limite de la saturation ;
- sat est le niveau de saturation de l'exposition lumineuse correspondant au deuxième rayonnement ;
- $niveau_{exterieur}$ est le niveau mesuré de l'éclairage ambiant.

La prise en compte du rapport d'optimisation est effectuée comme suit :

$$c'_{\lambda_2} = c_{\lambda_2} * \frac{m}{sat}$$

où

- $c_{\lambda_2}$ est la consigne du deuxième rayonnement calculé comme précédemment indiqué sans prendre en compte la luminosité ambiante ;
- $c'_{\lambda_2}$ est la consigne du deuxième rayonnement tenant compte du rapport d'optimisation ;
- $m/sat$ est le rapport d'optimisation.

La réalisation de plusieurs captures avec des longueurs d'ondes différentes permet une mesure des propriétés réflectives et absorbantes de l'épiderme. En combinant les résultats, le dispositif permet de détecter un doigt artificiel (ou faux doigt). Des supports pourraient être présentés devant le lecteur, par exemple une image d'empreintes digitales, affichée sur un écran ou encore imprimée sur un papier.

Bien entendu, l'invention n'est pas limitée au mode de réalisation décrit mais englobe toute variante entrant dans le champ de l'invention telle que définie par les revendications.

En particulier, les première et deuxième plages de longueurs d'onde peuvent être différentes de celles mentionnées ci-dessus. En particulier, l'une de ces plages de longueurs d'onde peut s'étendre hors du domaine visible et par exemple couvrir l'infrarouge. Ces plages peuvent être plus ou moins étendues ou couvrir des longueurs différentes.

## Revendications

1. Dispositif de capture optique d'empreintes digitales comprenant :

   - un moyen d'illumination adapté pour émettre un premier rayonnement lumineux d'au moins une première longueur d'onde et un deuxième rayonnement lumineux d'au moins une deuxième longueur d'onde distincte de la première ;
   - un capteur optique sensible aux rayonnements lumineux à la première longueur d'onde et à la deuxième longueur d'onde ;
   - un moyen de commande du moyen d'illumination et du moyen de détection, qui est agencé pour commander séquentiellement :
   - l'illumination par le premier rayonnement lumineux et une première capture d'une première image par le capteur optique ;
   - l'illumination par le deuxième rayonnement lumineux et une deuxième capture d'une deuxième image par le capteur optique ;

le moyen de commande étant agencé pour :

   - asservir, en fonction d'un niveau de détection du premier rayonnement lumineux par le capteur optique, au moins un paramètre d'émission du deuxième rayonnement lumineux pour optimiser la qualité de la deuxième image ;
   - traiter la deuxième image pour en extraire des caractéristiques biométriques représentatives d'une empreinte digitale.

2. Dispositif de capture optique selon la revendication 1, dans lequel le moyen de commande est agencé pour commander un ajustement d'une puissance d'émission du deuxième rayonnement lumineux en fonction du niveau de détection du premier rayonnement lumineux.

3. Dispositif de capture optique selon l'une des revendications précédentes, dans lequel le moyen de commande est agencé pour ajuster un gain du capteur optique en fonction du niveau de détection du premier rayonnement lumineux.

4. Dispositif de capture optique selon l'une des revendications précédentes, dans lequel la deuxième longueur d'onde appartient au domaine visible.

5. Dispositif de capture optique selon l'une des revendications précédentes, dans lequel la première longueur d'onde appartient au domaine visible.

6. Dispositif de capture optique selon l'une des revendications précédentes, dans lequel le moyen de commande comprend au moins un processeur, une mémoire vive, une mémoire morte, un générateur de signaux et au moins un comparateur.

7. Dispositif de capture optique selon la revendication 2, dans lequel le moyen de commande est un microcontrôleur.

8. Dispositif de capture optique selon la revendication 1, dans lequel au moins un paramètre d'émission du deuxième rayonnement lumineux et au moins un paramètre de la deuxième capture sont asservis, en fonction d'un niveau de détection du premier rayonnement lumineux par le capteur optique, pour optimiser la qualité de la deuxième image.

9. Dispositif de capture optique selon la revendication 1, dans lequel le paramètre de la deuxième capture est ajusté en fonction de l'albédo de la peau du doigt calculé en fonction d'une énergie lumineuse émise lors de la première exposition lumineuse et d'une énergie lumineuse détectée lors de la première capture.

**10.** Procédé de capture optique d'une empreinte d'un doigt, le procédé comprenant les étapes de :

- effectuer une première capture optique d'une première image sous une première exposition lumineuse à au moins une première longueur d'onde ;
- effectuer une deuxième capture optique d'une deuxième image sous une deuxième exposition lumineuse à au moins une deuxième longueur d'onde distincte de la première, au moins un paramètre d'émission de la deuxième exposition lumineuse étant déterminé en fonction d'un niveau de détection de la première exposition lumineuse par le capteur optique pour optimiser la qualité de la deuxième image ;
- extraire de la deuxième image des caractéristiques représentatives d'une empreinte digitale.

**11.** Procédé selon la revendication 10, comprenant les étapes supplémentaires de :

- effectuer une capture optique intermédiaire sous une exposition lumineuse ambiante après avoir effectué la première capture ;
- déduire un niveau de l'exposition lumineuse ambiante pour calculer un rapport d'optimisation vis-à-vis d'une saturation du deuxième rayonnement ;
- prendre en compte ce rapport d'optimisation pour déterminer un paramètre d'amplification optimal pour la deuxième capture optique.

**12.** Procédé selon la revendication 11, **caractérisé en ce que** la détermination du niveau du deuxième rayonnement est effectuée en fonction d'une consigne de niveau du premier rayonnement, d'une mesure de niveau du premier rayonnement, d'une valeur de niveau cible du premier rayonnement et d'un facteur d'albédo de la peau entre la première longueur d'onde et la deuxième longueur d'onde, d'un ratio propre au système composé par un moyen d'émission du premier rayonnement et d'un capteur optique de détection.

**13.** Procédé selon la revendication 11 ou 12, **caractérisé en ce que** le niveau d'exposition ambiante est déduit par soustraction de la mesure d'un niveau de la première capture et du niveau de la capture intermédiaire.

**14.** Procédé selon l'une des revendications 11 à 13, **caractérisé en ce que** le calcul du rapport d'optimisation tient compte de la différence minimum entre le niveau de saturation du deuxième rayonnement et le niveau d'exposition ambiante.

**15.** Procédé selon la revendication 10, dans lequel le paramètre de la deuxième capture est ajusté en fonction de l'albédo de la peau du doigt calculé en fonction d'une énergie lumineuse émise lors de la première exposition lumineuse et d'une énergie lumineuse détectée lors de la première capture.

**Patentansprüche**

**1.** Vorrichtung zur optischen Erfassung von Fingerabdrücken, die enthält:

- eine Beleuchtungseinrichtung, die geeignet ist, eine erste Lichtstrahlung mindestens einer ersten Wellenlänge und eine zweite Lichtstrahlung mindestens einer zweiten Wellenlänge anders als die erste zu emittieren;
- einen optischen Sensor, der für die Lichtstrahlungen auf der ersten Wellenlänge und auf der zweiten Wellenlänge empfindlich ist;
- eine Steuereinrichtung der Beleuchtungseinrichtung und der Erkennungseinrichtung, die eingerichtet ist, um sequentiell zu steuern:
- die Beleuchtung durch die erste Lichtstrahlung und eine erste Erfassung eines ersten Bilds durch den optischen Sensor;
- die Beleuchtung durch die zweite Lichtstrahlung und eine zweite Erfassung eines zweiten Bilds durch den optischen Sensor;

wobei die Steuereinrichtung eingerichtet ist, um:

- abhängig von einem Erkennungsniveau der ersten Lichtstrahlung durch den optischen Sensor mindestens einen Emissionsparameter der zweiten Lichtstrahlung zu regeln, um die Qualität des zweiten Bilds zu optimieren;
- das zweite Bild zu verarbeiten, um daraus für einen Fingerabdruck repräsentative biometrische Merkmale zu extrahieren.

**2.** Optische Erfassungsvorrichtung nach Anspruch 1, wobei die Steuereinrichtung eingerichtet ist, um eine Anpassung einer Emissionsleistung der zweiten Lichtstrahlung abhängig vom Erkennungsniveau der ersten Lichtstrahlung zu steuern.

**3.** Optische Erfassungsvorrichtung nach einem der vorhergehenden Ansprüche, wobei die Steuereinrichtung eingerichtet ist, um eine Verstärkung des optischen Sensors abhängig vom Erkennungsniveau der ersten Lichtstrahlung anzupassen.

**4.** Optische Erfassungsvorrichtung nach einem der vorhergehenden Ansprüche, wobei die zweite Wellenlänge zum sichtbaren Bereich gehört.

5. Optische Erfassungsvorrichtung nach einem der vorhergehenden Ansprüche, wobei die erste Wellenlänge zum sichtbaren Bereich gehört.

6. Optische Erfassungsvorrichtung nach einem der vorhergehenden Ansprüche, wobei die Steuereinrichtung mindestens einen Prozessor, einen Arbeitsspeicher, einen Festspeicher, einen Signalgenerator und mindestens einen Komparator enthält.

7. Optische Erfassungsvorrichtung nach Anspruch 2, wobei die Steuereinrichtung ein Mikrocontroller ist.

8. Optische Erfassungsvorrichtung nach Anspruch 1, wobei mindestens ein Emissionsparameter der zweiten Lichtstrahlung und mindestens ein Parameter der zweiten Erfassung abhängig von einem Erkennungsniveau der ersten Lichtstrahlung durch den optischen Sensor geregelt werden, um die Qualität des zweiten Bilds zu optimieren.

9. Optische Erfassungsvorrichtung nach Anspruch 1, wobei der Parameter der zweiten Erfassung abhängig von dem Albedo der Haut des Fingers angepasst wird, die abhängig von einer bei der ersten Belichtung emittierten Lichtenergie und einer bei der ersten Erfassung erkannten Lichtenergie berechnet wird.

10. Verfahren zur optischen Erfassung eines Abdrucks eines Fingers, wobei das Verfahren die folgenden Schritte enthält:

    - Ausführen einer ersten optischen Erfassung eines ersten Bilds unter einer ersten Belichtung mit mindestens einer ersten Wellenlänge;
    - Ausführen einer zweiten optischen Erfassung eines zweiten Bilds unter einer zweiten Belichtung mit mindestens einer zweiten Wellenlänge anders als die erste, wobei mindestens ein Emissionsparameter der zweiten Belichtung abhängig von einem Erkennungsniveau der ersten Belichtung durch den optischen Sensor bestimmt wird, um die Qualität des zweiten Bilds zu optimieren;
    - Extrahieren von für einen Fingerabdruck repräsentativen Merkmalen aus dem zweiten Bild.

11. Verfahren nach Anspruch 10, das die folgenden zusätzlichen Schritte enthält:

    - Ausführen einer optischen Zwischenerfassung unter einer Umgebungsbelichtung nach Ausführung der ersten Erfassung;
    - Ableiten eines Niveaus der Umgebungsbelichtung, um ein Optimierungsverhältnis gegenüber einer Sättigung der zweiten Strahlung zu berechnen;
    - Berücksichtigen dieses Optimierungsverhältnisses, um einen optimalen Verstärkungsparameter für die zweite optische Erfassung zu bestimmen.

12. Verfahren nach Anspruch 11, **dadurch gekennzeichnet, dass** die Bestimmung des Niveaus der zweiten Strahlung abhängig von einem Niveausollwert der ersten Strahlung, einem Niveaumesswert der ersten Strahlung, einem Zielniveauwert der ersten Strahlung und einem Albedo-Faktor der Haut zwischen der ersten Wellenlänge und der zweiten Wellenlänge, einem für das von einer Emissionseinrichtung der ersten Strahlung und einem optischen Erkennungssensor gebildete System spezifischen Verhältnis ausgeführt wird.

13. Verfahren nach Anspruch 11 oder 12, **dadurch gekennzeichnet, dass** das Umgebungsbelichtungsniveau durch Subtraktion des Messwerts eines Niveaus der ersten Erfassung und des Niveaus der Zwischenerfassung abgeleitet wird.

14. Verfahren nach einem der Ansprüche 11 bis 13, **dadurch gekennzeichnet, dass** die Berechnung des Optimierungsverhältnisses die Mindestdifferenz zwischen dem Sättigungsniveau der zweiten Strahlung und dem Umgebungsbelichtungsniveau berücksichtigt.

15. Verfahren nach Anspruch 10, wobei der Parameter der zweiten Erfassung abhängig von der Albedo der Haut des Fingers angepasst wird, die abhängig von einer bei der ersten Belichtung emittierten Lichtenergie und von einer bei der ersten Erfassung erkannten Lichtenergie berechnet wird.

**Claims**

1. Device for the optical capture of fingerprints, comprising:

    - an illumination means designed to emit first light radiation having at least one first wavelength and second light radiation having at least one second wavelength different from the first;
    - an optical sensor sensitive to the light radiation at the first wavelength and at the second wavelength;
    - a control means for controlling the illumination means and the detection means, which is designed to sequentially control:

        - the illumination by the first light radiation and a first capture of a first image by the optical sensor;
        - the illumination by the second light radiation and a second capture of a second image by the optical sensor; the control means being designed to:

- control, on the basis of a level of detection of the first light radiation by the optical sensor, at least one emission parameter of the second light radiation in order to optimize the quality of the second image;
- process the second image in order to extract therefrom biometric characteristics representative of a fingerprint.

2. Optical capture device according to Claim 1, wherein the control means is designed to control adjustment of an emission power of the second light radiation on the basis of the level of detection of the first light radiation.

3. Optical capture device according to either of the preceding claims, wherein the control means is designed to adjust a gain of the optical sensor on the basis of the level of detection of the first light radiation.

4. Optical capture device according to one of the preceding claims, wherein the second wavelength belongs to the visible domain.

5. Optical capture device according to one of the preceding claims, wherein the first wavelength belongs to the visible domain.

6. Optical capture device according to one of the preceding claims, wherein the control means comprises at least one processor, a random access memory, a read-only memory, a signal generator and at least one comparator.

7. Optical capture device according to Claim 2, wherein the control means is a microcontroller.

8. Optical capture device according to Claim 1, wherein at least one emission parameter of the second light radiation and at least one parameter of the second capture are controlled, on the basis of a level of detection of the first light radiation by the optical sensor, so as to optimize the quality of the second image.

9. Optical capture device according to Claim 1, wherein the parameter of the second capture is adjusted on the basis of the albedo of the skin of the finger as computed on the basis of light energy emitted during the first light exposure and light energy detected during the first capture.

10. Method for the optical capture of a fingerprint, the method comprising the steps of:

- performing a first optical capture of a first image under a first light exposure at at least one first wavelength;
- performing a second optical capture of a second image under a second light exposure at at least one second wavelength different from the first, at least one emission parameter of the second light exposure being determined on the basis of a level of detection of the first light exposure by the optical sensor, in order to optimize the quality of the second image;
- extracting, from the second image, characteristics representative of a fingerprint.

11. Method according to Claim 10, comprising the additional steps of:

- performing an intermediate optical capture under ambient light exposure after having performed the first capture;
- deducing a level of the ambient light exposure in order to compute an optimization ratio in relation to saturation of the second radiation;
- taking this optimization ratio into account in order to determine an optimum amplification parameter for the second optical capture.

12. Method according to Claim 11, **characterized in that** the level of the second radiation is determined on the basis of a setpoint level of the first radiation, of a measured level of the first radiation, of a target level value for the first radiation and of an albedo factor of the skin between the first wavelength and the second wavelength, of a ratio specific to the system formed by a means for emitting the first radiation and of an optical detection sensor.

13. Method according to Claim 11 or 12, **characterized in that** the ambient exposure level is deduced by subtracting the measurement of a level of the first capture and the level of the intermediate capture.

14. Method according to one of Claims 11 to 13, **characterized in that** the computing of the optimization ratio takes into account the minimum difference between the saturation level of the second radiation and the ambient exposure level.

15. Method according to Claim 10, wherein the parameter of the second capture is adjusted on the basis of the albedo of the skin of the finger as computed on the basis of light energy emitted during the first light exposure and light energy detected during the first capture.

1

2

3

4

ROM
Programme

RAM
Données

Processeur

Ports
Entrée/Sortie

$C_{\lambda_2} = C_{\lambda_1} \times \dfrac{\text{niveau cible}}{\text{niveau } \lambda_1} \times f$

5

Fig. 1

**EP 3 242 249 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2009148005 A1, ROWE ROBERT K